# EUROPEAN PATENT APPLICATION

(11) **EP 2 072 774 A1**
(43) Date of publication of application: **24.06.2009**
(21) Application number: 07123452.0
(22) Date of filing: 18.12.2007
(51) Int. Cl.: F01N 3/30, F01N 3/10, F01N 3/22, F01N 3/035, F01N 7/02

(54) **Compression ignition engine comprising a three way catalyst device**

(71) Applicant: Delphi Technologies, Inc., Troy, Michigan 48007 (US)
(72) Inventor: Schreurs, Bart Hubert, 6700 Waltzing (BE)
(74) Representative: Robert, Vincent

(57) **Abstract**

A compression ignition engine (10) having an intake passage (14) and an exhaust passage (16), the exhaust passage (16) including an after-treatment assembly (18), **characterized in that** the after-treatment assembly (18) comprises:
- an up-stream three way catalyst device (26),
- a down-stream catalyst device (28) having at least an oxidation function, and
- an air injection inlet (30) located between the two catalyst devices (26, 28) in order to make the exhaust gas flow entering the down-stream oxidation catalyst device (28) leaner with an excess amount of air compared to the air/fuel ratio entering the up-stream three way catalyst device (26).

## Description

### TECHNICAL FIELD

The present invention relates generally to exhaust gas treatment for compression ignition engine for vehicles.

### BACKGROUND OF THE INVENTION

The main pollutants of concern in the gases emitted from the exhaust system of an internal combustion engine are hydrocarbons (HC), carbon monoxide (CO), oxides of nitrogen (NOx), and particulates (i.e. soot).

In order to reduce the emissions of HC, CO, and NOx from gasoline fuelled spark ignition engined vehicles, three way catalytic converters have been widely implemented, such three way catalytic devices incorporating a reduction catalyst, to reduce NOx to N2 and 02, and an oxidation catalyst, to oxidize CO to CO2 and HC to H2O and CO2. However, for correct operation of a three way catalyst, the vehicle engine must be controlled to operate stoichiometrically where the amount of oxygen supplied to the combustion chamber corresponds to that required for complete combustion of the amount of fuel supplied. For gasoline, this corresponds to an air/fuel ratio of 14.7 parts air to 1 part fuel.

When there is more air, and hence oxygen, than required, then the system is said to be running lean, and the system is in oxidizing condition. In that case, the converter's two oxidizing reactions (oxidation of CO and HC) are favoured, at the expense of the reducing reaction. When there is excessive fuel, then the engine is running rich. The reduction of NOx is favoured, at the expense of CO and HC oxidation. If an engine could be held at the strict stoichiometric point for the fuel used, it is theoretically possible to reach 100% conversion efficiencies.

Unlike spark ignition gasoline fuelled engines, diesel fuelled compression ignition engines are normally operated under lean conditions with excess air (lambda>1). Thus, while an oxidation catalyst can be used to oxidize CO to CO2 and HC to H2O and CO2, excess oxygen in the exhaust gases due to the lean bum conditions normally prevents reduction of NOx to N2 and O2 and thus prevents the use of a three way catalyst.

The big challenge for future diesel emissions is the reduction of NOx emissions. Two approaches are currently pusured to achieve this objective, either separately or in combination.

The first approach involves reducing the production of NOx in the combustion chamber by using high levels of exhaust gas recirculation (EGR).

Generally diesel engines operate with excess air and thus can operate with EGR rates over 50%, especially at idle, where there is otherwise a very large amount of excess air. EGR works by recirculating a portion of an engine's exhaust gas back into the combustion chambers. Intermixing the incoming air with recirculated exhaust gas dilutes the mix with inert gas, lowering the adiabatic flame temperature and reducing the amount of excess oxygen. The exhaust gas also increases the specific heat capacity of the mix lowering the peak combustion temperature. Because NOx formation progresses much faster at high temperatures, EGR serves to limit the generation of NOx.

However, it is very difficult to obtain extremely high EGR rates at medium to high engine loads. Thus for these operating conditions it is not easy to get low engine-out NOx emissions. This is is a particular problem during acceleration phases of the emissions test.

The second approach is to use after-treatment of the exhaust gases to remove the NOx.

Selective catalytic reduction (SCR) can be used to reduce the NOx, wherein a gaseous or liquid reductant (most commonly ammonia or urea) is added to the exhaust gas stream and is absorbed onto a catalyst. The reductant reacts with NOx in the exhaust gas to form H2O (water vapour) and N2 (nitrogen gas). However, SCR is very sensitive to fuel contaminants, operates in a limited (high) temperature operation window and is costly.

Another method of exhaust after-treatment to remove the NOx is the use of a lean NOx trap. This requires rich regeneration phases (increased fuel consumption), has limited temperature operation window and is again costly and prone to failure due to fuel contamination, in particular sulphur.

### SUMMARY OF THE INVENTION

According to the present invention, to overcome the above mentioned drawbacks, there is provided a compression ignition engine having an intake passage and an exhaust passage, the exhaust passage including an after-treatment assembly, characterized in that the after-treatment assembly comprises:
- an up-stream three way catalyst device,
- a down-stream catalyst device having at least an oxidation function, and
- an air injection inlet located between the two catalyst devices in order to make the exhaust gas flow entering the down-stream oxidation catalyst device leaner with an excess amount of air compared to the air/fuel ratio entering the up-stream three way catalyst device

Thus in the higher load areas where the engine should be operated at lambda 1, the target lambda can be made slightly richer to get extreme high NOx conversion efficiencies. Simultaneously, by feeding fresh air after the up-stream three way catalyst device, the air/fuel ratio at the entrance of the down-stream oxidation catalyst device is artificially made leaner than lambda 1, which lead to high CO and HC conversion efficiencies.

The present invention also provides an after-treatment assembly to be arranged in the exhaust passage of a compression ignition engine, characterized in that it comprises a first brick forming an up-stream three way catalyst device and a second brick forming a down-stream catalyst device, the two bricks being embedded in a single housing, the down-stream end of the first brick delimiting with the up-stream end of the second brick an intermediate inner space in the housing, and in that the housing is provided with an air injection inlet for injecting air in the intermediate inner space.

The present invention also provides a method of operating such a compression ignition engine, characterized in that it comprises an air injection operating mode wherein the engine is controlled so that the air/fuel ratio entering into the up-stream three way catalyst device is slightly richer than lambda one in order to get high NOx conversion efficiency in the up-stream three way catalyst device, and wherein additional air is fed into the after treatment assembly between the up-stream three way catalyst device and the down-stream catalyst device to obtain a flow of exhaust gas with lambda leaner than lambda one in order to get high CO and HC conversion efficiency in the down-stream catalyst device.

The above-described and other features of the present disclosure will be appreciated and understood by those skilled in the art from the following detailed description, drawings, and appended claims.

### BRIEF DESCRIPTION OF THE DRAWINGS

The present invention is now described by way of example with reference to the accompanying drawings in which:

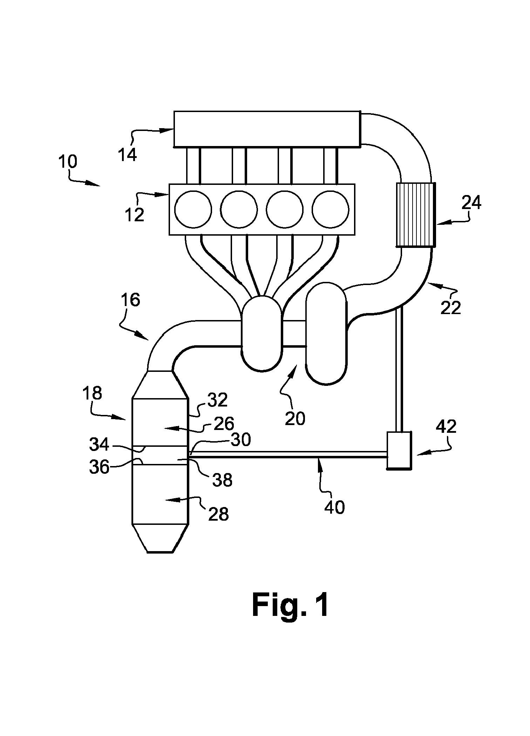

Figure 1 is a schematic view showing a diesel compression ignition engine according to a preferred embodiment of the invention.

### DESCRIPTION OF THE PREFERRED EMBODIMENT

Referring to figure 1, a diesel compression ignition engine 10 according to a preferred embodiment of the present invention is shown. The engine 10 comprises an engine block 12 connected up-stream to an air intake passage 14 and connected down-stream to an exhaust passage 16.

According to the embodiment shown, the exhaust passage 16 includes an after-treatment assembly 18 and a turbo-charger 20.

The turbo-charger 20 is fitted in between the engine block 12 and the after-treatment assembly 18. It comprises an outlet duct 22 connected to the air intake passage 14 through an air cooler device 24 in order to provide the engine 10 with compressed air.

According to the present invention, the after-treatment assembly 18 comprises an up-stream three way catalyst device 26 and a down-stream catalyst device 28 having at least an oxidation function. Furthermore, an air injection inlet 30 is located between the two catalyst devices 26, 28 in order to make the exhaust gas flow entering the down-stream catalyst device 28 leaner with an excess amount of air compared to the air/fuel ratio entering the up-stream three way catalyst device 26.

The down-stream catalyst device 26 is preferably an oxidation catalytic converter. Alternatively it can be a catalysed diesel particulate filter or a three way catalytic converter.

According to a preferred embodiment, the after-treatment assembly 18 comprises a housing 32 containing a first brick forming the up-stream three way catalyst device 26, and a second brick forming the down-stream oxidation catalyst device 28. The down-stream end 34 of the first brick 26 delimiting with the up-stream end 36 of the second brick 28 an intermediate inner space 38 where the air injection inlet 30 is fitted.

According to the embodiment shown, the air fed into the intermediate inner space 38 through the air injection inlet 30 comes from the turbo-charger 20. The air injection inlet 30 is connected to the outlet duct 22 through an air injection pipe 40, at a bleeding point located between the turbo-charger 20 and the air cooler 24.

Advantageously, a control valve 42 is arranged between the air injection inlet 30 and the outlet duct 22 of the turbo-charger 20 in order to selectively inject air in the after-treatment assembly 18 according to the lambda operating range of the engine 10.

The method of operating the compression ignition engine 10 according to the preferred embodiment comprises an air injection operating mode. In this air injection operating mode, the engine 10 is controlled so that the air/fuel ratio entering into the up-stream three way catalyst device 26 is slightly richer than lambda one in order to get high NOx conversion efficiency in the up-stream three way catalyst device 26. Then, additional air is fed into the after treatment assembly 18 thanks to the air injection inlet 30 to obtain a flow of exhaust gas entering the down-stream catalyst device 28 with lambda leaner than lambda one in order to get high CO and HC conversion efficiency in the down-stream catalyst device 28.

Preferably, the air injection operating mode comprises a rich operating mode wherein the flow rate of air into one or more combustion chambers of the engine 10 and/or the injection of fuel into said one or more combustion chambers are controlled to run the engine 10 with a target lambda richer than lambda one such that the air/fuel ratio entering into the up-stream three way catalyst device 26 is slightly richer than lambda one.

The rich operating mode is operated at least during the higher load areas of engine operating range. It could be also operated at medium load, when the engine is operated under stoichiometric conditions.

It could be noted that at low load, i.e. load area where the engine can be operated with extremely high Exhaust Gas Recirculation (EGR) rates (>50%), the engine-out NOx emissions are so low that no aftertreatment is necessary. Therefore the engine does not need to be operated at lambda one in this low load area.

At higher loads, there is no easy and practical way to get extremely high EGR rates. Therefore it is difficult to achieve ultra low engine-out NOx emissions targets. The method according to the present invention solves this problem thanks to the air injection in between the up-stream catalyst device 26 and the down-stream catalyst device 28.

Additionally, the air injection operating mode can comprises a lean operating mode wherein the flow rate of air into one or more combustion chambers of the engine 10 and/or the injection of fuel into said one or more combustion chambers are controlled to run the engine 10 with a target lambda leaner than lambda one. Simultaneously, fuel is injected into the exhaust passage 16, upstream regarding the upstream three way catalyst device 26, such that the air/fuel ratio entering into the up-stream three way catalyst device 26 is slightly richer than lambda one in order to get high NOx conversion efficiency in the up-stream three way catalyst device 26. Then air is fed into the after treatment assembly 18 as for the rich operating mode.

Fuel can be injected into the exhaust passage 16 by means of an additional fuel injector (not shown) located in the exhaust manifold of the engine 10.

## Claims

1. A compression ignition engine (10) having an intake passage (14) and an exhaust passage (16), the exhaust passage (16) including an after-treatment assembly (18), **characterized in that** the after-treatment assembly (18) comprises:
- an up-stream three way catalyst device (26),
- a down-stream catalyst device (28) having at least an oxidation function, and
- an air injection inlet (30) located between the two catalyst devices (26, 28) in order to make the exhaust gas flow entering the down-stream oxidation catalyst device (28) leaner with an excess amount of air compared to the air/fuel ratio entering the up-stream three way catalyst device (26).

2. The compression ignition engine (10) according to claim 1, **characterized in that** the after-treatment assembly (18) comprises a first brick forming the up-stream three way catalyst device (26) and a second brick forming the down-stream catalyst device (28), the two bricks (26, 28) being embedded in a single housing (32), the down-stream end (34) of the first brick (26) delimiting with the up-stream end (36) of the second brick (28) an intermediate inner space (38) in the housing (32) where the air injection inlet (30) is located.

3. The compression ignition engine (10) according to claim 1 or 2, wherein it comprises a turbo-charger (20) having an outlet duct (22) connected to the intake passage (14) of the engine (10) to provide the engine (10) with compressed air, **characterized in that** the air injection inlet (30) is connected to the outlet duct (22) of the turbo-charger (20).

4. The compression ignition engine (10) according to claim 3, **characterized in that** a control valve (42) is arranged between the air injection inlet (30) and the outlet duct (22) of the turbo-charger (20) in order to selectively inject air in the after-treatment assembly (18) according to the lambda operating range of the engine (10).

5. The compression ignition engine (10) according to anyone of claims 1 to 4, **characterized in that** the down-stream catalyst device (28) is chosen among an oxidation catalytic converter, a catalyzed diesel particulate filter, and a three way catalytic converter.

6. An after-treatment assembly (18) to be arranged in the exhaust passage (16) of a compression ignition engine (10), **characterized in that** it comprises a first brick (26) forming an up-stream three way catalyst device and a second brick (28) forming a down-stream catalyst device, the two bricks (26, 28) being embedded in a single housing (32), the down-stream end (34) of the first brick (26) delimiting with the up-stream end (36) of the second brick (28) an intermediate inner space (38) in the housing (32), and **in that** the housing (32) is provided with an air injection inlet (30) for injecting air in the intermediate inner space (38).

7. The after-treatment assembly (18) according to claim 6, **characterized in that** the down-stream catalyst device (28) is chosen among an oxidation catalytic converter, a catalyzed diesel particulate filter, and a three way catalytic converter.

8. A method of operating a compression ignition engine (10) according to anyone of claims 1 to 5, **characterized in that** it comprises an air injection operating mode wherein the engine is controlled so that the air/fuel ratio entering into the up-stream three way catalyst device (26) is slightly richer than lambda one in order to get high NOx conversion efficiency in the up-stream three way catalyst device (26), and wherein additional air is fed into the after treatment assembly (18) between the up-stream three way catalyst device (26) and the down-stream catalyst device (28) to obtain a flow of exhaust gas with lambda leaner than lambda one in order to get high CO and HC conversion efficiency in the down-stream catalyst device (28).

9. A method according to claim 8, **characterized in that** the air injection operating mode comprises a rich operating mode wherein the flow rate of air into one or more combustion chambers of the engine (10) and/or the injection of fuel into said one or more combustion chambers are controlled to run the engine (10) with a target lambda richer than lambda one such that the air/fuel ratio entering into the up-stream three way catalyst device (26) is slightly richer than lambda one.

10. The method according to claim 9, **characterized in that** the rich operating mode is operated at least during the higher load areas of engine operating range.

11. A method according to anyone of claims 8 to 10, **characterized in that** the air injection operating mode comprises a lean operating mode wherein the flow rate of air into one or more combustion chambers of the engine (10) and/or the injection of fuel into said one or more combustion chambers are controlled to run the engine (10) with a target lambda leaner than lambda one, and wherein fuel is injected into the exhaust passage (16), upstream regarding the upstream three way catalyst device (26), such that the air/fuel ratio entering into the up-stream three way catalyst device (26) is slightly richer than lambda one.
